# EUROPEAN PATENT SPECIFICATION

(11) **EP 1 978 285 B1**
(45) Date of publication and mention of the grant of the patent: **07.05.2014**
(21) Application number: 08251297.1
(22) Date of filing: 03.04.2008
(51) Int. Cl.: F16H 61/662, F16H 59/38

(54) **Continuously variable transmission**
Stufenlos verstellbares Getriebe
Transmission variable continue

(30) Priority: 05.04.2007 JP 2007099818
(43) Date of publication of application: 08.10.2008
(73) Proprietor: Yamaha Hatsudoki Kabushiki Kaisha, Iwata-shi, Shizuoka 438-8501 (JP)
(72) Inventor: Asaoka, Ryousuke, c/o Yamaha Hatsudoki K. K., Shizuoka-ken 438-8501 (JP)
(74) Representative: Moreland, David

(56) References cited:
- JP-A- 6 249 329
- US-A- 4 663 990
- US-A- 4 724 724
- US-A1- 2004 235 615

## Description

### FIELD OF THE INVENTION

The present invention relates to a continuously variable transmission, and more specifically, a continuously variable transmission for transmitting power from an output shaft of a drive unit to an input shaft of a centrifugal clutch and in which a change gear ratio is controlled by a control unit.

### BACKGROUND TO THE INVENTION

As shown in FIG. 1 and FIG. 2, power in a power unit 900 of a scooter-type motorcycle 1000 is transmitted in the following order: an engine 100 as a drive unit; a continuously variable transmission 200; a centrifugal clutch 300; a reduction gear 400; and a driving wheel 500. For example, as shown in FIG. 3, the centrifugal clutch 300 is mounted between a hollow central axis 12 of a secondary sheave 14 of the continuously variable transmission 200 and a final gear shaft 401 extended through the central axis 12. As shown in FIG. 3 and FIG. 4, the centrifugal clutch 300 includes a clutch plate 301, clutch shoes 302, clutch springs 303, and a clutch housing 304.

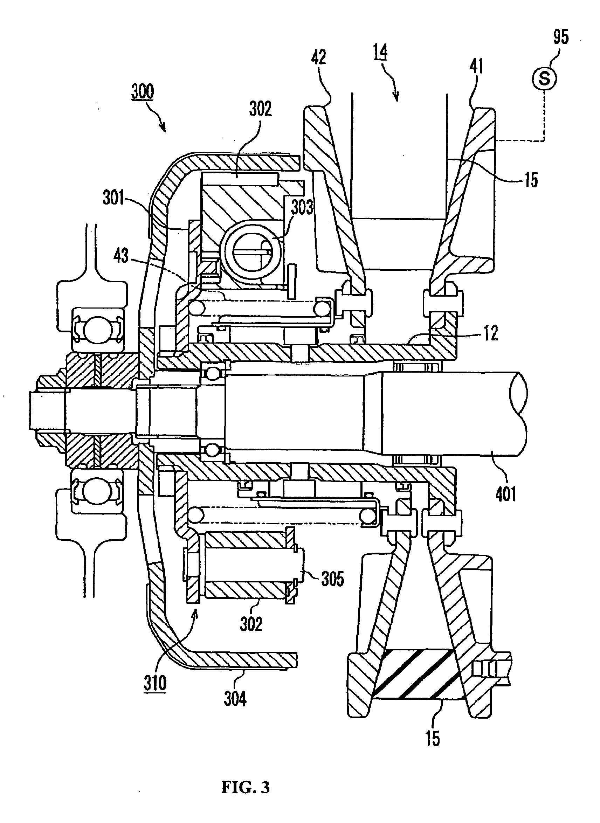

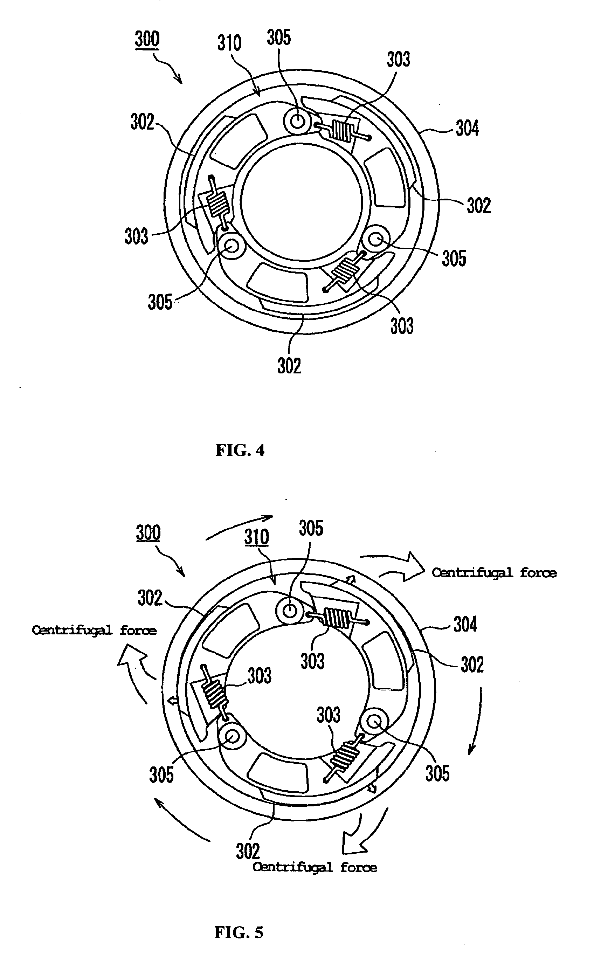

As shown in FIG. 3, the clutch plate 301 is fixed to the central axis 12 of the secondary sheave 14 of the continuously variable transmission 200. Pin 305 for assembling the clutch shoe 302 is provided in a protruding manner in the clutch plate 301. In an example shown in FIG. 3, the three pins 305 are attached at regular intervals in a circumferential direction. As shown in FIG. 4, one end of each clutch shoe 302 is attached to a respective pin 305 for turning relative to the clutch plate 301. Each clutch spring 303 is assembled so as to couple one end of one clutch shoe 302 with the other end of an adjacent clutch shoe 302 in the circumferential direction. Each clutch spring 303 exerts an elastic reaction force for constantly attracting respective ends of adjacent clutch shoes 302. The clutch housing 304 is a bowl-shaped member attached to the final gear shaft 401, which extends through the hollow central axis 12 of the secondary sheave 14, and is arranged to cover an assembly 310 of the aforementioned clutch shoe 302.

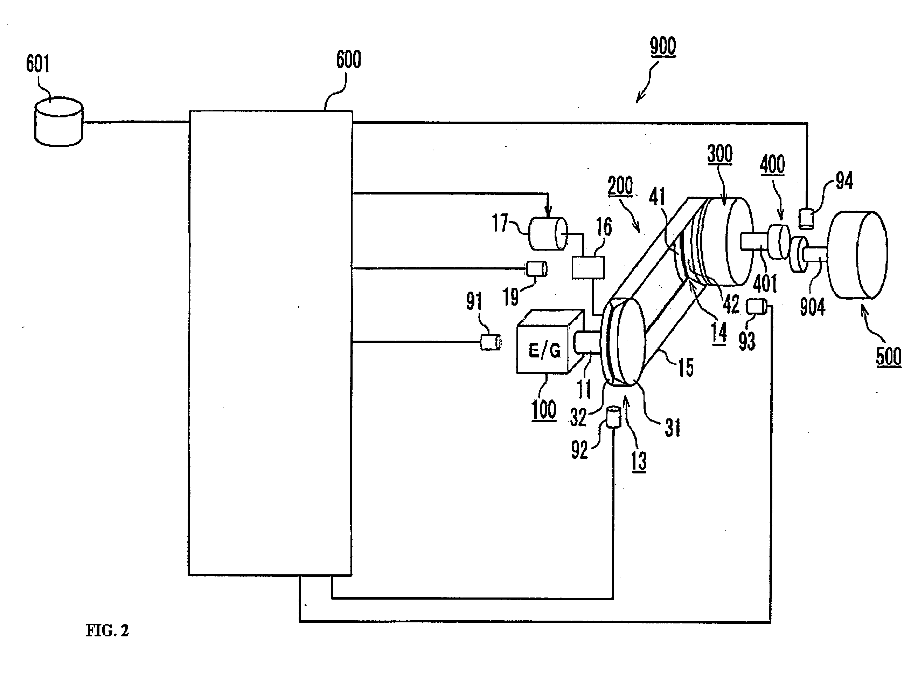

When the engine 100 is not running, as shown in FIG. 4, the assembly 310 of the clutch shoe 302 is contracted as a whole by the elastic reaction force of the clutch springs 303, and the clutch shoes 302 and the clutch housing 304 are not in contact with each other. When the secondary sheave 14 starts rotating at startup of the engine 100, as shown in FIG. 5, the assembly 310 of the clutch shoe 302 expands as a whole with its centrifugal force against the elastic reaction force of the clutch springs 303, and the clutch shoes 302 come in contact with the clutch housing 304. After occurrence of a stalling state in which the clutch shoe 302 and the clutch housing 304 transmit torque while sliding, the clutch shoes 302 and the clutch housing 304 reach a connected state by the frictional force acting between the clutch shoe 302 and the clutch housing 304. In the centrifugal clutch 300, torque in response to the frictional force of the clutch shoes 302 and the clutch housing 304 is transmitted to the output shaft 401. For example, JP-A-2006-71096 discloses such a centrifugal clutch 300. In addition, a change gear ratio of the continuously variable transmission 200 is controlled by a control unit 600, as shown in FIG. 2. The control unit 600 is provided with a database (a gear ratio map) for setting in advance target change gear ratios to be a control target based on a vehicle speed, a rotational speed of an engine, a throttle opening, and the like in various driving modes while a vehicle is running. The control unit 600 follows the gear ratio map to set the target change gear ratio becoming a control target based on the information such as the actual vehicle speed and the throttle opening.

A greater force is needed at startup. Therefore, the continuously variable transmission 200 is usually controlled in a predetermined LOW ratio at startup. On the contrary, a startup ratio memorizing means for storing preset change gear ratios at startup according to various throttle openings is provided in JP-A-3194641. It is disclosed that once an engine speed passes a preset value in an upward direction, a startup ratio memorizing means retrieves the change gear ratio at startup that corresponds to the throttle opening, and then the change gear ratio of the continuously variable transmission is adjusted to be the readout change gear ratio.

The same patent document discloses that the target change gear ratio of the continuously variable transmission is set according to the throttle opening at startup, that is, that the target change gear ratio of the continuously variable transmission is controlled closer to a TOP side than a maximum LOW ratio according to the throttle opening at startup. Also, according to the same patent document it is said that "because a startup ratio is set in the early stage when the engine speed starts increasing, and because a pulley 6b of a continuously variable transmission 3 is driven, as shown in a dotted line in FIG. 5(b), a smooth start can be performed without the excessive rotational speed of the engine, occurrence of undershooting due to excessive suppression control of the excessive rotational speed of the engine, or repeating undershooting and overshooting, that is, so-called hunting" by such control (JP-A-2006-71096, para. 0037).

In a case where a clutch shoe has been worn in a considerable degree due to aged deterioration and the like, a rotational speed of an engine becomes abnormally high at startup by the time a centrifugal clutch is engaged. As described above, in the case where clutch shoe 302 has been worn in a considerable degree due to the aged deterioration and the like, a stalling state of a centrifugal clutch 300 continues for a long period of time, and a rotational speed of an engine 100 becomes abnormally high. Therefore, an abraded member of the clutch shoe 302 comes in a state where they can be further easily worn. As a result, replacement of the clutch shoe 302 is required at a faster pace. Because change gear ratios are uniformly controlled to a predetermined LOW ratio in response to a throttle opening in the control disclosed in JP-A-06-249329, the aforementioned problem is not solved by the control disclosed in the aforementioned JP-A-06-249329.

The closest prior art document is another example of a control system for a continuously variable transmission, and is described by US20040235615. This describes a motorcycle that includes a centrifugal clutch disposed between the transmission and a rear wheel. An electronic control unit stores an idle up use transmission map and a warmed up use transmission map and carries out control of the transmission based on the idle-up use transmission map upon starting the engine, and switches to the warmed-up use transmission map when various conditions are satisfied. If the system determines that the system is not idling, by determining if the clutch mechanism is engaged or if the throttle valve opening is larger than a predetermined value or if the engine speed NE is higher than a rotational speed that is higher than the idling speed in a warmed up state, then either a weighted transmission map or a warmed-up transmission map are set. The idle-up use transmission map is a high rotational speed map set such that the rotational speed of the engine in the idle-up state becomes highest, and the warmed-up use transmission map is a low rotational speed transmission map such that the rotational speed of the engine becomes the lowest. The weighted transmission map is set within a region between the idle-up use transmission map and the warmed up-use transmission map.

### SUMMARY OF THE INVENTION

Aspects of the present invention are set forth in the independent claims. Preferred but non-essential features of the invention are set forth in the dependent claims.

A continuously variable transmission according to the present invention is a continuously variable transmission for transmitting power from an output shaft of a drive unit to an input shaft of a centrifugal clutch. A change gear ratio of the continuously variable transmission is controlled by a control unit. Then, the control unit performs a clutch engagement processing for controlling the change gear ratio of the continuously variable transmission to a TOP side in order for the centrifugal clutch to be engaged in a case where the centrifugal clutch is disengaged, and where a rotational speed of the drive unit is higher than a predetermined first rotational speed.

According to a continuously variable transmission in the present invention, a change gear ratio of the continuously variable transmission is controlled to a TOP side by a clutch engagement processing in order for a centrifugal clutch to be engaged in a case where the centrifugal clutch is disengaged and where a speed of a drive unit is higher than a predetermined rotational speed of the drive unit. Therefore, it can prevent the rotational speed of the drive unit from becoming abnormally higher than the predetermined rotational speed of the drive unit. Also, it allows to engage the centrifugal clutch in an early stage by shortening a period of time in which the centrifugal clutch stalls. Thereby, it can prevent the further deterioration of the centrifugal clutch such as abrasion of a clutch shoe. In addition, for example, the clutch engagement processing is not performed in a case where the rotational speed of the drive unit does not become higher than the predetermined rotational speed of the drive unit. Therefore, when the centrifugal clutch functions normally, the continuously variable transmission functions is controlled normally, and an appropriate torque can be obtained at startup.

### BRIEF DESCRIPTION OF THE DRAWINGS

These and other aspects of the present invention will now be described, by way of example only, with reference to the accompanying drawings, in which:

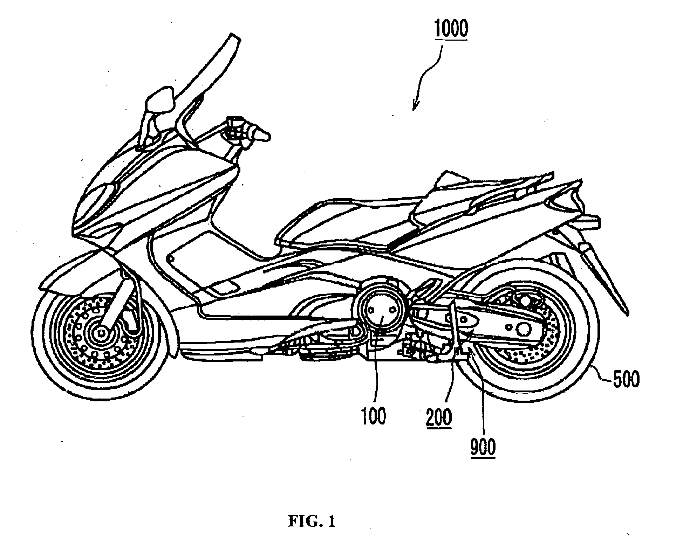

FIG. 1 is a side view showing a motorcycle provided with a continuously variable transmission in accordance with an embodiment of the present invention;
FIG. 2 is a schematic view of the continuously variable transmission;
FIG. 3 is a cross-sectional side view of a centrifugal clutch;
FIG. 4 is a cross-sectional front view of the centrifugal clutch;
FIG. 5 is a cross-sectional front view for showing a centrifugal clutch in use;

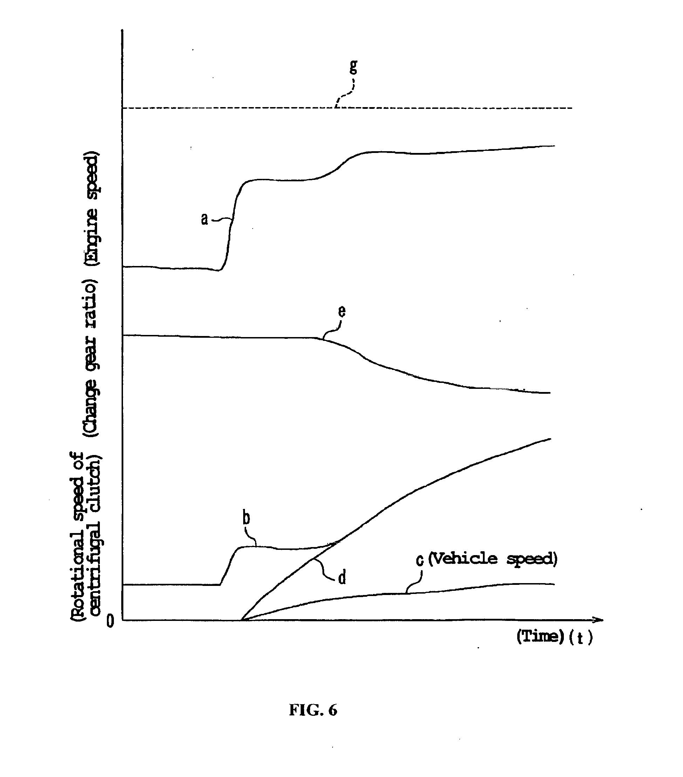

FIG. 6 is a diagram, which illustrates changes in a rotational speed of an engine, a change gear ratio, a rotational speed of the centrifugal clutch, and a vehicle speed at startup;

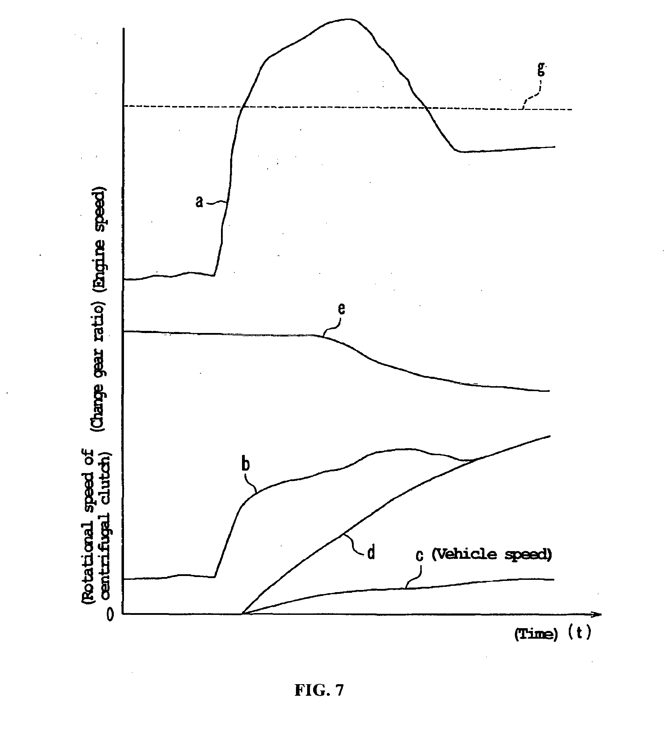

FIG. 7 is a diagram, which illustrates changes in the rotational speed of the engine, the change gear ratio, the rotational speed of the centrifugal clutch, and the vehicle speed at startup;

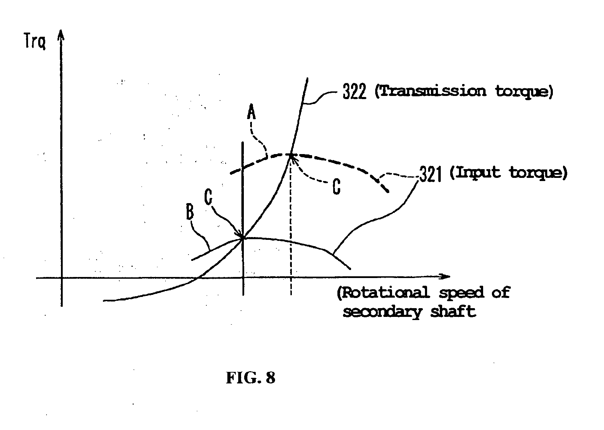

FIG. 8 is a diagram, which illustrates a relation between input torque and output torque of the centrifugal clutch;

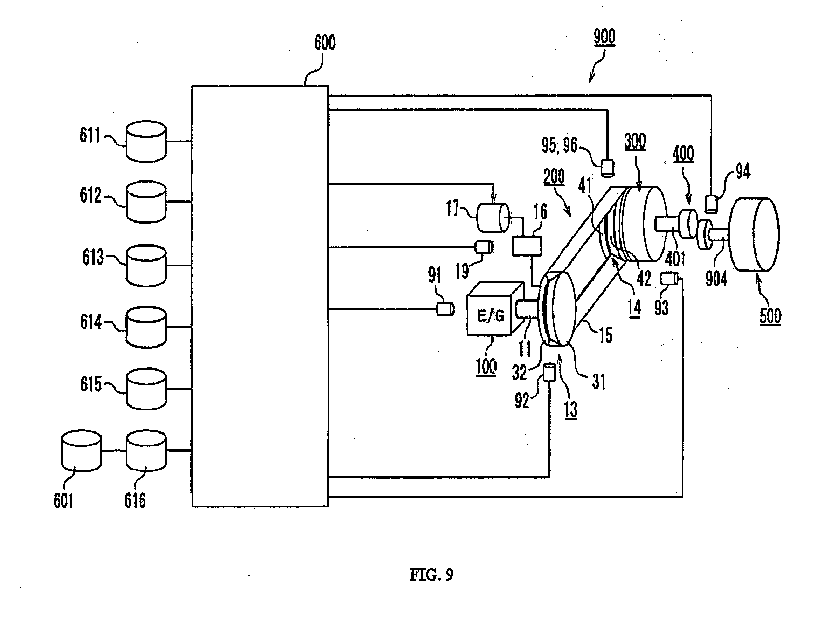

FIG. 9 is a schematic diagram of the continuously variable transmission in accordance with the embodiment of the present invention;

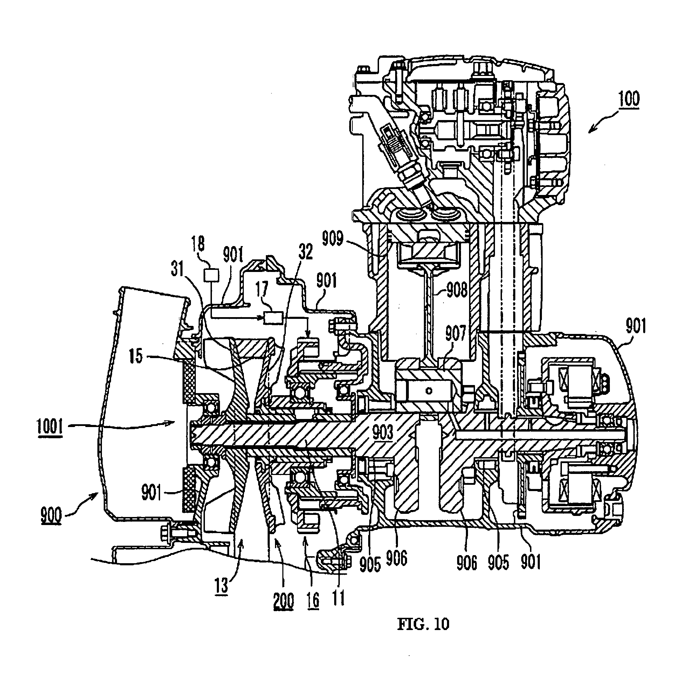

FIG. 10 is a partially sectional view of the continuously variable transmission in accordance with the embodiment of the present invention;

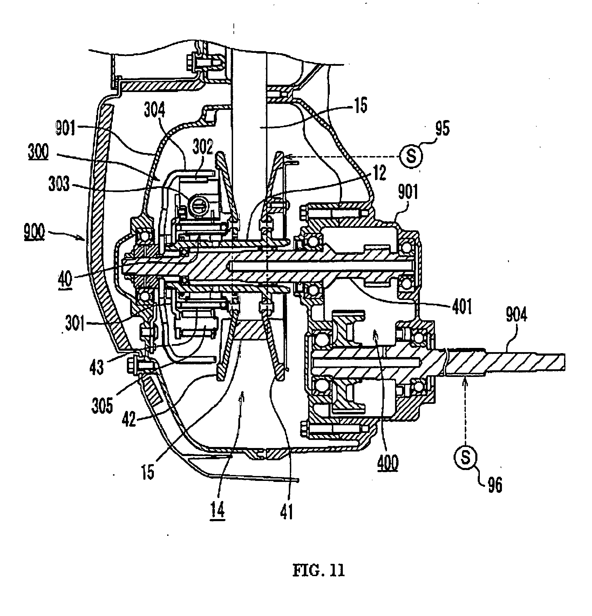

FIG. 11 is a partial sectional view of the continuously variable transmission in accordance with the embodiment of the present invention;

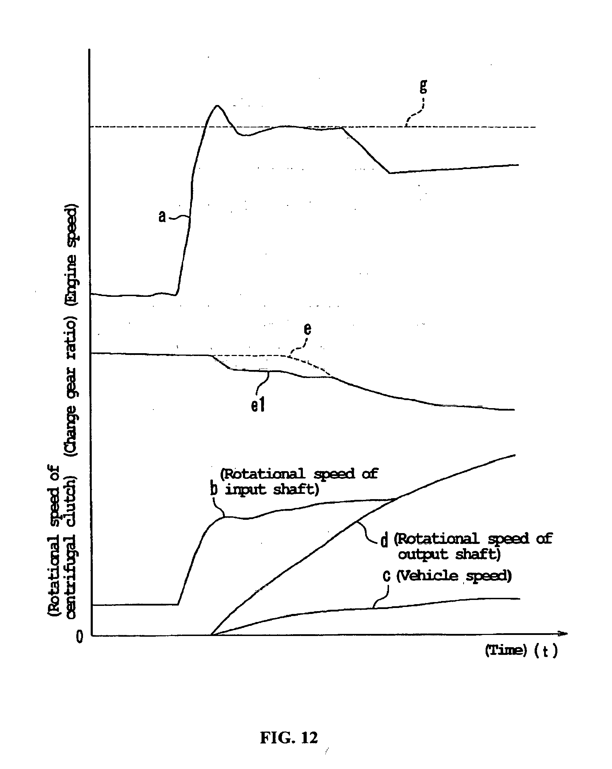

FIG. 12 is a diagram, which illustrates changes in the rotational speed of the engine, the change gear ratio, the rotational speed of the centrifugal clutch, and the vehicle speed at startup of the continuously variable transmission in accordance with the embodiment of the present invention;

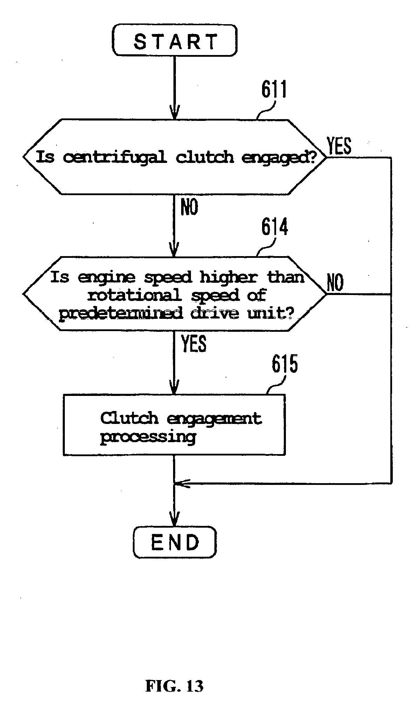

FIG. 13 is a flow chart of the continuously variable transmission in accordance with the embodiment of the present invention;

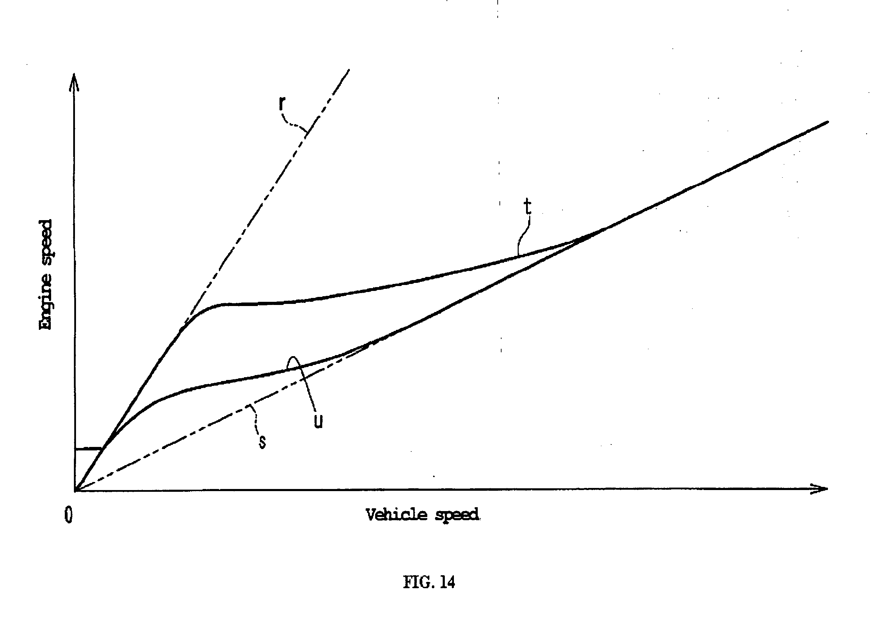

FIG. 14 is a gear ratio map of the continuously variable transmission in accordance with the embodiment of the present invention; and

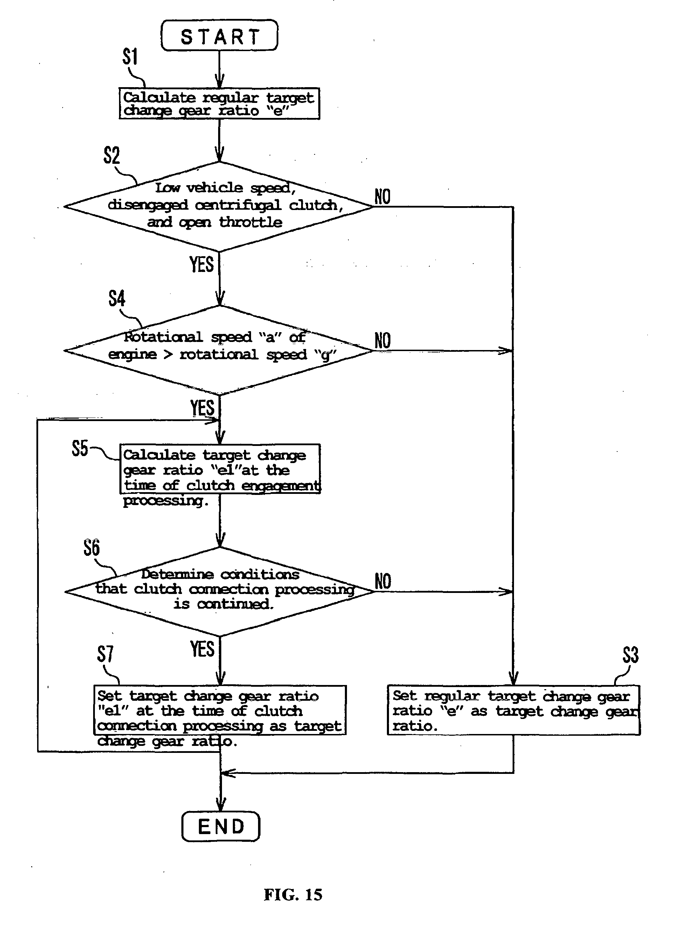

FIG. 15 is a flow chart of the continuously variable transmission in accordance with the embodiment of the present invention.

### DETAILED DESCRIPTION OF THE DRAWINGS

A description will hereinafter be made of a continuously variable transmission according to an embodiment of the present invention with reference to the drawings. In the drawings, the same reference numeral is given to members and parts having the same function. It should be understood that the present invention is not limited to the embodiment below.

The inventor considers an appropriate control method in relation to a continuously variable transmission for transmitting power from an output shaft of such a drive unit to an input shaft of a centrifugal clutch. As described above, if clutch shoes have been worn in a considerable degree due to aged deterioration and the like, a rotational speed of an engine becomes abnormally high at startup by the time the centrifugal clutch is engaged at startup. Ordinarily in such a case, the clutch shoe or the centrifugal clutch is replaced with a new one. In addition to the aged deterioration of the clutch shoes, an event, in which the rotational speed of the engine becomes abnormally high at startup by the time the centrifugal clutch is engaged, occurs in a similar fashion, for example, in a case when a foreign matter such as oil gets into a space between a clutch housing and the clutch shoe, or right after exchange to a brand-new clutch, or at startup in a cold condition, because friction between the clutch housing and the clutch shoe is unstable. The inventor has proposed to relieve the abnormal rise of the rotational speed of the engine by changing control of the continuously variable transmission in such a case.

In order to study such an event, as shown in FIG. 6, the inventor measured a rotational speed "a" of an engine, a rotational speed "b" of a secondary sheave of the continuously variable transmission, and a vehicle speed "c" when a scooter-type motorcycle 1000 starts moving from rest. In addition, a rotational speed "d" of an output shaft 401 of a centrifugal clutch 300 is calculated from the vehicle speed "c". By the way, a target change gear ratio "e" of the continuously variable transmission indicates target values of control, which are respectively set by a control unit. In this test, as shown in FIG. 2, the target change gear ratio "e" as a control target is set based on the information such as the vehicle speed "c" and a throttle opening, following a preset gear ratio map 601.

Measurement results for a case where the centrifugal clutch of the scooter-type motorcycle functions normally will be hereinafter indicated. In this case, as shown in FIG. 6, the centrifugal clutch 300 begins stalling once the rotational speed "a" of the engine increases to some extent. In the case where the centrifugal clutch 300 functions normally, the rotational speed "a" of the engine scarcely increases. Then, the centrifugal clutch 300 is engaged one or two seconds after the centrifugal clutch 300 begins stalling. In addition, as shown in FIG. 6, when the centrifugal clutch 300 is stalling, there occurs a difference between the rotational speed "d" of the output shaft 401 of the centrifugal clutch 300 which are calculated from the vehicle speed "c" and the rotational speed "b" of the secondary sheave 14 of the continuously variable transmission 200. Once the centrifugal clutch 300 is engaged, the rotational speed "d" of the output shaft 401 of the centrifugal clutch 300 coincides with the rotational speed "b" of the secondary sheave 14 of the continuously variable transmission 200.

Measurement results for a case in which the centrifugal clutch 300 functions abnormally due to abrasion of clutch shoes 302 in a considerable degree will now be described. In this case, as shown in FIG. 7, the centrifugal clutch 300 begins stalling once the rotational speed "a" of the engine increases to some extent. However, the centrifugal clutch 300 is slow to be engaged afterwards because the clutch shoes 302 have been worn. In addition, because the clutch shoes 302 have been worn in a considerable degree, torque is slow to be transmitted to a driving wheel 500, and consequently, it takes a long time for the vehicle speed "c" to increase. Therefore, the continuously variable transmission 200 is not shifted to the TOP side. Due to such circumstances, the rotational speed "a" of an engine 100 increases abnormally. In this example, after all, it took approximately 3.5 seconds for the centrifugal clutch 300 to be engaged after the centrifugal clutch 300 began stalling.

In the control in the aforementioned JP-A-06-249329, for example, a target change gear ratio of the continuously variable transmission is set in accordance with a throttle opening at startup, as described in FIG. 5 of the same patent document. Therefore, in the case where the centrifugal clutch 300 does not function normally due to the abrasion of the clutch shoes 302 in a considerable degree, as in the case shown in FIG. 7, the centrifugal clutch 300 continues to stall for a long period of time, and there is a possible occurrence of an event in which a rotational speed of the engine 100 becomes abnormally high when the centrifugal clutch 300 is engaged.

If the stalling state of the centrifugal clutch 300 continues for a long period of time, the clutch shoes 302 possibly wear at a faster pace. As a result, the replacement interval of the clutch shoes 302 shortens. In addition, if the centrifugal clutch 300 continues to stall for a long period of time, the rotational speed of the engine 100 also increases abnormally. It is preferable that the rotational speed of the engine 100 be kept low to some extent at startup. Such an event is not limited to the scooter-type motorcycle, but may also occur to other types of vehicle.

The inventor further made a study on a relationship between a condition in which the centrifugal clutch 300 is engaged and a change gear ratio of the centrifugal clutch 200.

As shown in FIG. 8, the centrifugal clutch 300 is engaged when an input torque 321 input to the centrifugal clutch 300 coincides with a transmission torque 322 which the centrifugal clutch 300 can transmit (C). That is, the faster the rotational speed input to the centrifugal clutch 300 becomes, the greater a centrifugal force of the centrifugal clutch 300 acting on the clutch shoes 302 becomes. Then, when the transmission torque 322 of the centrifugal clutch 300 becomes greater, and the transmission torque 322 of the centrifugal clutch 300 coincides with the input torque 322 input to the centrifugal clutch 300 (C), the centrifugal clutch 300 is engaged.

When the change gear ratio of the continuously variable transmission 200 is a LOW ratio, as shown in a dotted line A in FIG. 8, the input torque 321 input to the centrifugal clutch 300 is high. Therefore, when the rotational speed of an input shaft (secondary shaft 12) of the centrifugal clutch 300 becomes fast in a considerable degree, the centrifugal clutch is engaged.

When the change gear ratio of the centrifugal clutch 200 comes closer to a TOP side than the aforementioned LOW ratio, the rotational speed input to the centrifugal clutch 300 becomes faster, and the centrifugal force acting on the clutch shoe 302 of the centrifugal clutch 300 becomes greater. Therefore, the transmission torque 322 of the centrifugal clutch 300 becomes higher. On the contrary, as shown in a solid line B in FIG. 8, the input torque 321 input to the centrifugal clutch 300 becomes lower because the change gear ratio is low. Therefore, the centrifugal clutch 300 can be engaged in an early stage at startup (when the rotational speed of the secondary shaft 12 is slower).

The inventor considered that the centrifugal clutch 300 could possibly be engaged in an appropriate manner while suppressing the abnormal rise of the rotational speed of the engine 100 by controlling the continuously variable transmission 200 to the TOP side at the right time even in a case where the clutch shoes 302 have been worn in a considerable degree.

On the other hand, torque which the centrifugal clutch can transmit becomes low if the continuously variable transmission 200 is controlled to the TOP side. Great force is required at startup, and the appropriate torque is also needed. Therefore, the inventor considered that it would not be necessarily desirable to uniformly control the change gear ratio of the centrifugal clutch 200 to the TOP side in response to the throttle opening even in a case when the centrifugal clutch 300 functions normally, as disclosed in JP-A-06-249329. In other words, it is desirable that the appropriate starting torque can be obtained for the scooter-style motorcycle 1000 when the centrifugal clutch 300 functions normally. Therefore, the inventor considered that it would be desirable that the change gear ratio of the continuously variable transmission 200 is not uniformly controlled in response to the throttle opening but controlled in an appropriate amount, that is, to the TOP side at the right time in the case where the centrifugal clutch 300 does not function normally and the rotational speed of the engine 100 increases abnormally.

The inventor, thus, reached a conclusion of an innovative and entirely new control method for the continuously variable transmission based on such unique findings. A description will hereinafter be made of a continuously variable transmission in accordance with an embodiment of the present invention.

The continuously variable transmission 200, as shown in FIG. 9, transmits power from the output shaft of the engine 100 (drive unit) to the input shaft of the centrifugal clutch 300. The change gear ratio of the continuously variable transmission 200 is controlled by a control unit 600. In this embodiment, as shown in FIG. 9 to FIG. 11, the continuously variable transmission 200, as shown in FIG. 1, is arranged in a power unit 900 of the scooter-type motorcycle 1000.

In this embodiment, as shown in FIG. 9, the continuously variable transmission is a belt-type continuously variable transmission in which a belt 15 wound around a primary sheave 13 and the secondary sheave 14 each having a pair of flanges relatively movable in an axial direction. As shown in FIG. 9, the belt-type continuously variable transmission 200 includes a primary shaft 11, the secondary shaft 12 (see FIG. 3), the primary sheave 13, the secondary sheave 14, the belt 15, a groove width adjustment mechanism 16, an actuator 17, a flange position detection sensor 19, and the control unit 600.

In this embodiment, as shown in FIG. 10 and FIG. 11, the primary shaft 11 and the secondary shaft 12 are attached to a case 901 of the power unit 900 via bearings. In this embodiment, the primary shaft 11 is integrally formed with a crankshaft 903, which is the output shaft of the engine 100. The secondary shaft 12 is disposed in parallel with the primary shaft 11 and is coupled with a drive shaft 904. Various members for constituting a crank journal 905, a crank web 906, a crank pin 907, a connecting rod 908, and a piston 909 are coupled with the crankshaft 903.

The primary sheave 13 is arranged with the primary shaft 11 to which power output of the drive unit 100 is transmitted, and the secondary sheave 14 is arranged with the input shaft of the centrifugal clutch 300. A driven mechanism 40 for changing the groove width of the secondary sheave 14 in response to the groove width of the primary sheave 13 so that the secondary sheave 14 is capable of holding the belt 15 is included. Also included is the control unit 600 for controlling the groove width of the primary sheave 13.

In this embodiment, the primary sheave 13 and the secondary sheave 14 respectively include a fixed flange 31, 41 and a movable flange 32, 42 attached to a rotary shaft (the primary shaft 11 and the secondary shaft 12). The movable flange 42 of the secondary sheave 14 is constantly urged in a direction to narrow the groove width by a spring 43, which is disposed in a compressed state between the movable flange 42 and a clutch plate 301. The movement of the movable flange 32 of the primary sheave 13 is controlled by the control unit 600. The movable flange 42 of the secondary sheave 14 moves to a position at which a force received from the V-belt 15 in response to the movement of the movable flange 32 of the primary sheave 13 is balanced with an elastic reaction force of the spring 43. The fixed flanges 31, 41 and the movable flanges 32, 42 respectively form a V-groove for winding a belt thereon.

The V-belt 15 is wound onto such V-grooves of the primary sheave 13 and the secondary sheave 14 to transmit the rotational driving force between both of the sheaves 13, 14. The groove widths of the V-grooves change by the respective movement of the movable flanges 32, 42 in the axial direction of the primary shaft 11 and the secondary shaft 12, and consequently, the change gear ratio of the belt-type continuously variable transmission 200 changes.

The groove width adjustment mechanism 16 moves the movable flange 32 of the primary sheave 13 to adjust the groove width of the primary sheave 13. The actuator 17 drives the groove width adjustment mechanism 16. In this embodiment, the groove width of the primary sheave 13 is adjusted by locomotion control on the movable flange 32 of the primary sheave 13 with the actuator 17.

In this embodiment, an electric motor is used as the actuator 17. In this embodiment, as shown in FIG. 9, output of the electric motor 17 is controlled by electricity supplied to the electric motor 17 based on a control signal of the control unit 600. The supplied electricity to the electric motor 17 is preferably controlled by a PWM (Pulse Wide Modulation) method, for example. In the PWM method, the output of the electric motor 17 is controlled by changing a ON/OFF time ratio (duty ratio) of the electric motor 17 while voltage of the supplied electricity is kept constant. The output of the electric motor 17 is controlled by the PWM method in this embodiment; however, the control method is not limited to the PWM method as long as the output of the electric motor 17 can be suitably controlled. For example, the output of the electric motor 17 may be controlled by making the voltage of the supplied electricity changeable in an analog fashion.

The electric motor 17 is electrically connected to the control unit 600 (gearshift control unit). The control unit 600 is made up of an electronic control unit (ECU). The electronic control unit (ECU) includes a calculation section (microcomputer (MPU)) and a storage section (memory), for example. The control device 600 receives various vehicle information input from various sensors mounted on the vehicle.

The movable flange 32 moves in accordance with the rotation of the electric motor 17. The position of the movable flange 32 is detected by the flange position detection sensor 19. In addition, various sensors such as a throttle position sensor 91 (TPS), an engine speed sensor 92, vehicle speed sensors 93, 94 as well as the aforementioned flange position detection sensor 19 are electrically connected to the control unit 600, and the control unit 600 receives required information from various sensors about various conditions of the scooter-type motorcycle 1000.

The throttle position sensor 91 (TPS)is a sensor for detecting an accelerator opening (throttle opening). The engine speed sensor 92 is a sensor for detecting the rotational speed of the engine, and, in this embodiment, is made up of a sensor for detecting the rotational speed of the crankshaft (primary shaft 11). The sensor 93 detects the rotational speed of the final gear shaft 401 (output shaft of the centrifugal clutch 300). The sensor 94 detects the rotational speed of the drive shaft 904 of the driving wheel 500.

A description will hereinafter be made of control of the centrifugal clutch 300 and the continuously variable transmission 200 in this embodiment.

As shown in FIG. 3, the centrifugal clutch 300 is attached between a hollow central axis 12 of the secondary sheave 14 of the continuously variable transmission 200 and the final gear shaft 401, which extends through such central axis 12. Although not shown, the final gear shaft 401 is coupled with the driving wheel 500 of the scooter-type motorcycle 1000 via a reduction gear 400.

As shown in FIG. 9, the control unit 600 includes a clutch engagement processor 615 for controlling the change gear ratio of the continuously variable transmission 200 to the TOP side in order for the centrifugal clutch 300 to be engaged in the case where the centrifugal clutch 300 is disengaged and where the rotational speed of the engine 100 (drive unit) is higher than a predetermined first rotational speed. In other words, in this embodiment, the rotational speed "g" (the first rotational speed) becoming a standard for performing the clutch engagement processing is predetermined in the control unit 600. As shown in FIG. 12, the change gear ratio of the continuously variable transmission 200 is controlled to the TOP side in order for the centrifugal clutch 300 to be engaged in a case where the rotational speed "a" of the engine 100 (drive unit) is higher than the predetermined rotational speed "g".

Such clutch engagement processing can prevent the rotational speed "a" of the engine 100 from becoming abnormally higher than the predetermined rotational speed "g" in the case where the clutch shoes 302 have been worn in a considerable degree. Sequentially, the stall time of the centrifugal clutch 300 becomes shorter, and thus, the centrifugal clutch 300 is quickly engaged. Meanwhile, in the case where the centrifugal clutch 300 functions normally, as shown in FIG. 6, the rotational speed "g" is set such that the rotational speed "a" of the engine 100 does not become higher than the predetermined rotational speed "g" at startup. Thereby, in the case where the centrifugal clutch 300 functions normally, the clutch engagement processing is not performed. The continuously variable transmission 200 is controlled as usual, and can obtain an appropriate amount of torque at startup.

In this embodiment, as shown in FIG. 9, the control unit 600 includes a first determination section 611, a first detection section 612, a first setting section 613, a second determination section 614, and the clutch engagement processor 615. The control unit 600 respectively performs each designated processing according to the predetermined fixed programs.

The first determination section 611 determines whether or not the centrifugal clutch 300 is engaged. In this embodiment, the first determination section 611 determines whether or not the centrifugal clutch 300 is engaged, based on the rotational speed input to the centrifugal clutch 300 and the rotational speed output from the centrifugal clutch 300. In other words, as shown in FIG. 6 and FIG. 12, the first determination section 611 determines that the centrifugal clutch 300 is disengaged when the rotational speed "b" input to the centrifugal clutch 300 does not coincide with the rotational speed "d" output from the centrifugal clutch 300. On the other hand, the first determination section 611 determines that the centrifugal clutch 300 is engaged when the rotational speed "b" input to the centrifugal clutch 300 coincide with the rotational speed "d" output from the centrifugal clutch 300.

In this embodiment, as shown in FIG. 11, for the rotational speed "b" input to the centrifugal clutch 300, the rotational speed input to the centrifugal clutch 300 is detected based on a sensor 95 for detecting the rotational speed of the secondary sheave 14 of the continuously variable transmission 200.

In this embodiment, for the rotational speed "d" output from the centrifugal clutch 300, the vehicle speed "c" is determined based on a detected value obtained by a sensor 96 for detecting the rotational speed of the drive shaft 904 of the driving wheel 500, and the rotational speed "d" of the output shaft (final gear shaft 401 in this embodiment) of the centrifugal clutch 300 is calculated in view of a reduction ratio of the reduction gear 400 from the vehicle speed "c".

The first detection section 612 detects the rotational speed of the engine 100. In this embodiment, as shown in FIG. 9, the rotational speed of the engine 100 is detected based on the sensor 92 for detecting the rotational speed of the input shaft (primary shaft 11) of the continuously variable transmission 200.

As shown in FIG. 12, the first setting section 613 sets up the rotational speed "g" of the engine 100 (drive unit), which becomes a standard for starting the processing in which the change gear ratio of the continuously variable transmission 200 is controlled to the TOP side in order for the centrifugal clutch 300 to be engaged. The rotational speed "g" of the engine set herein is preferably stored in a storage section such as (nonvolatile memory) of the control unit 600 . The rotational speed "g" is preferably set in consideration of overshoot and the like, which may occur upon control, and is preferably set as a value slightly lower than the upper limit value of the rotational speed "a" of the engine at the precise startup, for example.

The second determination section 614 determines whether or not the rotational speed "a" of the engine 100 detected in the first detection section 612 is higher than the rotational speed "g" set in the first setting section 613.

The clutch engagement processor 615 is a control program set in the control unit 600, and performs the clutch engagement processing for controlling the change gear ratio "e" of the continuously variable transmission 200 to the TOP side in order for the centrifugal clutch 300 to be engaged in the case where the centrifugal clutch 300 is disengaged and where the rotational speed "a" of the engine 100 is higher than the predetermined rotational speed "g".

In this embodiment, the rotational speed "g" of the engine 100, at which the clutch engagement processing should be performed, is defined in advance in the first setting section 613. Then, the second determination section 614 determines whether or not the rotational speed "a" of the engine 100, which is detected in the first detection section 612, is higher than the rotational speed "g" set in the first setting section 613. Further, the first determination section 611 determines whether or not the centrifugal clutch 300 is engaged.

As shown in FIG. 13, the control unit 600 performs the clutch engagement processing 615 in the case where the centrifugal clutch 300 is determined to be disengaged based on the determination result in the first determination section 611, and where, in the second determination section 614, the rotational speed of the engine of the engine 100 is determined to be higher than the rotational speed of the engine 100 set in the first setting section 613.

The scooter-type motorcycle 1000 is used in this embodiment. As shown in FIG. 6, on the scooter-type motorcycle 1000, the engine 100 runs at the predetermined low rotational speed "a" in an idling state before startup. The centrifugal clutch 300 is disengaged in an idling state because the rotational speed "a" of the engine 100 is low. When the accelerator is operated at startup, the rotational speed "a" of the engine 100 becomes higher, and the centrifugal clutch 300 starts stalling.

In the case where the centrifugal clutch 300 functions normally, as shown in FIG. 6, as the rotational speed "a" of the engine 100 becomes higher, the transmission torque of the centrifugal clutch 300 smoothly increases. Therefore, the centrifugal clutch 300 is engaged within one to two seconds. At this moment, the rotational speed "a" of the engine 100 does not become higher than the predetermined rotational speed "g". As described above, in the case where the centrifugal clutch 300 functions normally, as shown in FIG. 13, it is not determined in the second determination section 614 that the rotational speed "a" of the engine 100 is higher than the predetermined rotational speed "g" (YES). Therefore, the clutch engagement processing 615 is not performed.

On the other hand, in the case where the clutch shoes 302 have been worn in a considerable degree, the clutch shoe 302 and a clutch housing 304 tend to be very slippery. Therefore, as shown in FIG. 12, even after the rotational speed "a" of the engine 100 becomes high, the centrifugal clutch 300 is slow to be engaged. Then, the rotational speed "a" of the engine 100 further increases. As shown in FIG. 13, once the rotational speed "a" of the engine 100 becomes higher than the rotational speed "g" of the engine set in the first setting section, it is determined in the first determination section 611 that the centrifugal clutch 300 is disengaged (YES), and is also determined in the second determination section 614 that the rotational speed "a" of the engine 100 is higher than the predetermined rotational speed "g" (YES). Consequently, the control unit 600 performs the clutch engagement processing 615 when such determinations are made.

The clutch engagement processing 615 controls the change gear ratio of the continuously variable transmission 200 to the TOP side in order for the centrifugal clutch 300 to be engaged. If the change gear ratio of the continuously variable transmission 200 is controlled to the TOP side, the rotational speed input to the centrifugal clutch 300 becomes faster, and the centrifugal force acting on the clutch shoes 302 of the centrifugal clutch 300 becomes larger. On the contrary, the input torque input to the centrifugal clutch 300 becomes smaller. Therefore, the centrifugal clutch 300 becomes easily connectable. In addition, once the centrifugal clutch 300 becomes easily connectable, increase in the rotational speed "a" of the engine 100 can be suppressed. The engine speed does not rise sharply at startup with such control even in the case where there are aforementioned defects on the centrifugal clutch. Thereby, the torque transmitting to the driving wheel becomes further suitable, and drivability improves.

As shown in FIG. 12, the control unit 600 controls the change gear ratio of the continuously variable transmission 200 to the TOP side in order for the centrifugal clutch 300 to be engaged in the case where the centrifugal clutch is disengaged and where the rotational speed "a" of the engine 100 is higher than the predetermined rotational speed "g". Therefore, the centrifugal clutch 300 is engaged in an early stage even in the case where the clutch shoes 302 have been worn in a considerable degree. Because the centrifugal clutch 300 is engaged in the early stage, further abrasion of the clutch shoes 302 can be prevented or minimised. Thereby, the replacement interval of the clutch shoes 302 can be extended. Meanwhile, in the case where the centrifugal clutch 300 functions normally, as shown in FIG. 6, the rotational speed "a" of the engine 100 does not become higher than the predetermined rotational speed "g". Therefore, the clutch engagement processing 615 is not performed, and the continuously variable transmission 200 is controlled as usual.

As described above, the control unit can automate the performance of the clutch engagement processing 615 by the determinations of the first determination section 611 and the second determination section 614.

Alternatively, the control unit 600 may cancel the clutch engagement processing 615 in the case where it is determined in the aforementioned first determination section 611 that the centrifugal clutch 300 is engaged, for example. In other words, in the case where the centrifugal clutch 300 is engaged, there is no necessity to keep the clutch engagement processing 615. Thus, it is preferable that the control unit 600 automatically cancel the clutch engagement processing 615. Once the centrifugal clutch 300 is engaged, the regular ordinary change gear ratio control is performed.

A specific example of the clutch engagement processing will be further described.

In this embodiment, the scooter-type motorcycle 1000 includes an accelerator operating means by which a rider operates the output. Also, as shown in FIG. 9, the control unit 600 includes a target change gear ratio setting section 616 for setting the target change gear ratio based on the vehicle speed "c" and the throttle opening.

The target change gear ratio setting section 616 stores the gear ratio map 601 which defines gear ratios of the continuously variable transmission 200 based on the vehicle information such as the vehicle speed and the throttle opening. For example, the gear ratio map 601 shown in the FIG. 14 is set. The horizontal axis represents the vehicle speed, and the vertical axis represents the rotational speed of the engine. In FIG. 14, a theoretical relation between the vehicle speed and the rotational speed of the engine at the predetermined change gear ratio at the time when the change gear ratio of the continuously variable transmission 200 is made LOW is indicated by "r". Also, in the same drawing, a theoretical relation between the vehicle speed and the rotational speed of the engine at the predetermined change gear ratio at the time when the change gear ratio of the continuously variable transmission 200 is made TOP is indicated by "s". In the gear ratio map 601 shown in FIG. 14, a target rotational speed of the engine "t" in a case of accelerating at full throttle, and a target rotational speed of the engine "u" in a case of decelerating at fully closed throttle are set. By the way, there is a relation as follows; target change gear ratio = target engine speed / vehicle speed. The target engine speed "t" and the target engine speed "u" are respectively replaceable with the target change gear ratio based on the aforementioned relation. In addition, it should be noted that the gear ratio map 601 described herein merely shows an example.

In this embodiment, the target gear ratio setting section 616 initially determines a position of the vehicle speed "c" on the horizontal axis of FIG.14 based on the information of the vehicle speed "c". Next, the target gear ratio setting section 616 obtains, multiplied by vehicle speed of a predetermined coefficient in accordance with the throttle (accelerator) opening, a control target value of the rotational speed of the engine 100(target rotational speed of the engine),which is between the target rotational speed of the engine "u" for deceleration at fully closed throttle and the target rotational speed of the engine "t" for acceleration at full throttle. Then, a target change gear ratio is obtained by dividing the target rotational speed of the engine by the vehicle speed "c". In this case, as the throttle opening gets smaller, the target rotational speed of the engine (target change gear ratio) is set to be closer to the target gear ratio for deceleration at fully closed throttle (u). Also, as the throttle opening gets larger, the target rotational speed of the engine (target change gear ratio) is set to be closer to the target gear ratio for acceleration at full throttle (t).

In this embodiment, the rotational speed (second rotational speed) for setting the target change gear ratio at the time of the clutch connection processing is preset in the clutch connection processor 615, and it is preferable that the target change gear ratio is set by dividing the second rotational speed by the rotational speed input to the centrifugal clutch. In this embodiment, the rotational speed "g" (first rotational speed) to determine whether or not the clutch engagement processing should be performed is utilized for the second rotational speed for calculating the change gear ratio at the time of the clutch engagement processing. In this embodiment, the rotational speed "g" (first rotational speed) for determining whether or not the clutch engagement processing should be performed is utilized for the second rotational speed for the clutch engagement processing; however, the second rotational speed for calculating the change gear ratio at the time of the clutch engagement processing can be set separately from the rotational speed "g" (first rotational speed) for determining whether or not the clutch engagement processing should be performed.

In this embodiment, as described above, the control unit 600 is provided with the target change gear ratio setting section 616 for calculating the target rotational speed of the engine based on the vehicle speed "c" and the throttle opening, and for setting the target change gear ratio by dividing the target rotational speed of the engine by the vehicle speed "c". In this embodiment, the clutch engagement processor 615 sets up the target change gear ratio by utilizing the target change gear ratio setting section 616.

In other words, in this embodiment, the target change gear ratio setting section 616 performs processing to set the target change gear ratio for the clutch engagement processing by utilizing the predetermined rotational speed "g" for the clutch engagement processing instead of the target rotational speed of the engine, and the rotational speed "b" input to the centrifugal clutch instead of the vehicle speed "c", and by dividing the predetermined rotational speed "g" for the clutch engagement processing by the rotational speed "b" input to the centrifugal clutch at the time of the clutch engagement processing.

In other words, in this embodiment, the clutch engagement processor 615 sets up a target change gear ratio "e1" at the time of the clutch engagement processing by dividing the rotational speed "g" by the rotational speed "b" input to the centrifugal clutch 300, as shown in FIG. 12. (target change gear ratio at the time of the clutch engagement processing "e1" = rotational speed "g" (second rotational speed) / rotational speed "b" of the secondary sheave)

Also, as shown in FIG. 11, the rotational speed of the secondary sheave 14 detected by the sensor 95 is adopted for the rotational speed "b" input to the centrifugal clutch 300. In addition, the dotted line "e" in FIG. 12 represents the regular target change gear ratio, which is set based on the vehicle speed "c" and the throttle opening according to the gear ratio map 601. The solid line "e1" in FIG. 12 represents the target change gear ratio at the time of the clutch engagement processing, which is set by dividing the predetermined rotational speed "g" by the rotational speed "b" of the secondary sheave 14.

The target change gear ratio setting section 616 usually controls the change gear ratio to the LOW shift while the vehicle speed "c" is low at startup. As described above, in the case where the clutch shoes 302 have been worn in a considerable degree and where the centrifugal clutch is disengaged due to the reason such as a slippery condition, as shown in FIG. 12, the vehicle speed "c" is slow to increase. Thus, the regular target change gear ratio "e" is set to the LOW shift.

In this embodiment, as described above, the clutch engagement processing 615 is performed in the case where the centrifugal clutch 300 is disengaged and where the rotational speed "a" of the engine 100 is higher than the predetermined rotational speed "g". Once the clutch engagement processing 615 is performed, the target change gear ratio "e1" at the time of the clutch engagement processing is set. In this embodiment, the target change gear ratio "e1" at the time of the clutch engagement processing is set by dividing the predetermined rotational speed "g" by the rotational speed "b" of the secondary sheave 14. In this case, as shown in FIG. 12, the rotational speed "b" of the secondary sheave 14 increases in a similar manner as the actual rotational speed "a" of the engine. However, because the predetermined rotational speed "g" remains unchanged, the speed difference between the rotational speed "b" and the actual rotational speed "a" of the engine becomes smaller as the rotational speed "b" of the secondary sheave 14 increases. Consequently, the target change gear ratio "e1" at the time of the clutch engagement processing is set to the TOP side.

On the other hand, based on the vehicle speed and the throttle opening, the change gear ratio is set according to the gear ratio map 601 in a regular control in which the clutch engagement processing is not performed. According to the gear ratio map 601, the change gear ratio in the LOW side is set at startup. Therefore, in the regular control, the target change gear ratio in the LOW side is set for the target change gear ratio "e" because the vehicle speed "c" is slow to increase at startup.

As described above, the target change gear ratio "e1" at the time of clutch engagement processing is set to the TOP side compared to the target change gear ratio "e" in the regular control in the case where the clutch engagement processing is not performed. In other words, in this embodiment, the target change gear ratio "e" in the case where the clutch engagement processing is not performed is calculated by calculating the target rotational speed of the engine based on the gear ratio map as described above, and by dividing the target rotational speed of the engine by the vehicle speed. In the case where the clutch is disengaged due to a reason such as the slipping clutch, the vehicle speed does not increase. Therefore, the target change gear ratio "e" in the case where the clutch engagement processing is not performed becomes higher, and the LOW ratio is set. On the other hand, the target change gear ratio "e1" at the time of the clutch engagement processing is calculated by a following formula; target change gear ratio "e1" = rotational speed "g" / rotational speed "b" of the secondary sheave . The target change gear ratio "e1" at the time of the clutch engagement processing becomes lower than the target change gear ratio "e", and is set to the TOP even in the case where the clutch is slipping because the rotational speed "b" of the secondary sheave increases in comparison with the vehicle speed. Therefore, in the case where the clutch is disengaged due to the reason such as the slipping clutch, the target change gear ratio "e1" is set to the TOP ratio, which is higher than the target change gear ratio "e". In addition, when the continuously variable transmission is controlled according to the target change gear ratio "e1"at the time of the clutch engagement processing set in such a manner, the rotational speed "b" of the secondary sheave increases, and the engagement of the centrifugal clutch is soon performed. Because the rotational speed "b" of the secondary sheave is adjusted in response to the above, the target change gear ratio "e1" does not become a TOP ratio, which is excessively high, and the appropriate target change gear ratio "e1" is set.

In this embodiment, the continuously variable transmission 200 is controlled to the TOP side, which is higher than usual, by controlling the change gear ratio of the continuously variable transmission 200 based on the target change gear ratio "e1" at the time of the clutch engagement processing. As described above, once the continuously variable transmission 200 is controlled to the TOP side, the centrifugal clutch 300 becomes easily engaged. Thereby, the defects such as that the centrifugal clutch 300 slips at startup are fixed, and it can prevent the engine speed from rising sharply at startup. In addition, thereby, the torque transmitted to the driving wheel becomes further suitable, and the drivability improves.

As described above, in the case where the clutch engagement processing is performed and where the target change gear ratio "e", which is usually set, becomes closer to the TOP side than the target change gear ratio "e1"set at the time of the clutch engagement processing, it is preferable that the control unit 600 cancel the clutch engagement processing. By the way, when the target change gear ratio "e1" set at the time of the clutch engagement processing coincides with the target change gear ratio "e", which is usually set, the clutch engagement processing may be either cancelled or continued. In other words, in the case where the target change gear ratio "e", which is usually set, comes closer to the TOP side than the target change gear ratio "e1" set at the time of the clutch engagement processing, the centrifugal clutch 300 is easily engaged if the change gear ratio is controlled at the target change gear ratio "e", which is usually set, controls. Therefore, the clutch engagement processing 615 is no longer needed to be continued, and thus, it may be cancelled.

In addition, the control unit may cancel the clutch engagement processing 615 in the case where the centrifugal clutch 300 is detected as being engaged. That is, once the centrifugal clutch 300 is engaged, the clutch engagement processing 615 may be cancelled.

A description will hereinafter be made of setting of the target change gear ratio "e1" at the time of the clutch engagement processing, and cancellation of the clutch engagement processing in this embodiment with reference to FIG. 15.

As shown in FIG. 15, the regular change gear ratio is calculated in the target change gear ratio setting section 616 based on the vehicle speed and the throttle opening (S1). Next, it is determined that the vehicle is at startup. In this embodiment, it is determined whether or not all three conditions are satisfied: the first condition is that the vehicle speed is lower than the predetermined vehicle speed; the second condition is that the centrifugal clutch 300 is disengaged; and the third condition is that the throttle is open (S2). If the determination in S2 is NO, the target change gear ratio "e", which is usually set in the target change gear ratio setting section 616, becomes the final target change gear ratio (S3).

If the determination in S2 is YES, it is determined whether or not the rotational speed of the engine 100 is higher than the predetermined rotational speed "g" (S4). If the determination in S4 is NO, that is, as shown in FIG. 6, if the rotational speed "a" of the engine 100 is not higher than the predetermined rotational speed "g", the centrifugal clutch 300 is engaged normally; therefore, there is no necessity to perform the clutch engagement processing 615. Therefore, the regular target change gear ratio "e" becomes the final target change gear ratio (S3).

If the determination in S4 is YES, the clutch engagement processing 615 is performed. In other words, as shown in FIG. 12, if the rotational speed "a" of the engine 100 is higher than the predetermined rotational speed "g", there is a possibility of abnormality in the centrifugal clutch 300, and the clutch engagement processing 615 is performed. In this embodiment, the target change gear ratio "e1" at the time of the clutch engagement processing is calculated (S5). The target change gear ratio "e1" at the time of the clutch engagement processing is set by dividing the predetermined rotational speed "g" by the rotational speed "b" of the secondary sheave 14.

Then, conditions for maintaining the clutch connection processing 615 are determined (S6). In this embodiment, it should be determined that the target change gear ratio "e1" at the time of the clutch engagement processing, which is calculated in S5, comes closer to the TOP side than the regular target change gear ratio "e" calculated in S1. The following formula is determined; the regular target change gear ratio "e" > the target change gear ratio "e1" at the time of the clutch engagement processing.

Then, if the conditions for maintaining the clutch engagement processing 615 are not satisfied in the determination in S6, that is, if the target change gear ratio "e1" at the time of the clutch engagement processing, which is calculated in S5, is not closer to the TOP side than the regular target change gear ratio "e" calculated in S1, the clutch engagement processing is cancelled, and the regular target change gear ratio "e" becomes the final target change gear ratio (S3).

If the conditions for maintaining the clutch engagement processing are satisfied in the determination in S6, that is, if the target change gear ratio "e1" at the time of the clutch engagement processing, which is calculated in S5, is closer to the TOP side than the regular target change gear ratio "e" calculated in S1, the clutch engagement processing is continued, and the target change gear ratio "e1" at the time of the clutch engagement processing becomes the final target change gear ratio (S7). Then, while the clutch engagement processing 615 continues, the processing in S5 and S6 are repeated.

In this embodiment, the clutch engagement processing 615 is automatically performed by the determinations in S2 and S4, and the clutch engagement processing 615 is automatically cancelled by the determination in S6.

The cancellation condition of the centrifugal clutch 300 determined in S6 is as follows; the clutch engagement processing may be cancelled either in the case where the engaging condition of the centrifugal clutch is detected or in the case when the regular target change gear ratio "e" is closer to the TOP side than the target change gear ratio "e1" at the time of the clutch engagement processing, whichever comes first.

As described above, it is possible to smoothly move from the unique controlling state at startup to the controlling state while the vehicle is running by setting that the clutch engagement processing is automatically cancelled under the appropriate conditions.

According to this embodiment, the control unit includes the target change gear ratio setting section for setting the target change gear ratio based on the vehicle speed and the throttle opening, and the clutch engagement processing sets up the target change gear ratio in the target change gear ratio setting section by dividing the predetermined rotational speed "g" by the rotational speed "b of the secondary sheave 14. Therefore, the change gear ratio can be shifted to the TOP side by the appropriate amount in accordance with the abnormal rise of the rotational speed "a" of the engine. Thereby, even in the case where the centrifugal clutch 300 has been worn in a considerable degree, the centrifugal clutch 300 can be appropriately engaged in the early stage.

Although a continuously variable transmission in accordance with an embodiment of the present invention has been described above, the continuously variable transmission in accordance with the present invention is not limited to the embodiment described above.

For example, the structures of the continuously variable transmission 200, the groove width adjustment mechanism 16, the flange position detection sensor 19, the control device 600 and so forth are not limited to those disclosed in the above embodiment.

Also, the detection of the rotational speed input to the centrifugal clutch 300 and the detection of the rotational speed output from the centrifugal clutch 300 are not limited to those disclosed in the above embodiment. For example, the rotational speed input to the centrifugal clutch 300 may be detected by a sensor for detecting the rotational speed of the rotary shaft 12 provided with an assembly of the clutch shoes 302. In addition, the rotational speed output from the centrifugal clutch 300 may be detected by a sensor for detecting the rotational speed of the clutch housing 304. The above description is nothing but a single alternative example, and various modifications can be made. Also, the rotational speed of the input shaft of the continuously variable transmission can also be detected by the rotational speeds of the primary sheave and the primary shaft. In addition, the present invention may be constructed such that, in the case where the change gear ratio of the continuously variable transmission is controlled by the control unit, the control unit is the one that performs the clutch engagement processing for controlling the change gear ratio to the TOP side in order for the centrifugal clutch to be engaged in the case where the centrifugal clutch is disengaged and where the rotational speed of the engine of the drive unit is higher than the predetermined first engine. The aforementioned embodiment illustrates such an embodiment, and calculating methods such as calculating method of the target change gear ratio and that of the target change gear ratio at the time of the clutch engagement processing are not limited to those disclosed in the above embodiment, and various modifications can be made.

Also, a continuously variable transmission is not limited to a belt-type continuously variable transmission. An engine is illustrated as a drive unit; however, the drive unit is not limited to the engine but can be an electric motor, etc. In other words, the present invention is a continuously variable transmission for transmitting power from an output shaft of a drive unit to an input shaft of a centrifugal clutch, and is widely applicable as long as a change gear ratio of the continuously variable transmission is controlled by a control unit. A variety of modifications can be made for the structures of the drive unit, the continuously variable transmission, and the centrifugal clutch.

Although the belt-type continuously variable transmission 200 included in a power unit of a motorcycle is illustrated in the above embodiment, the belt-type continuously variable transmission 200 may be applied to various types of vehicles other than motorcycles. For example, the belt-type continuously variable transmission 200 can be widely applied to a straddle-type vehicle (including a three-wheeled buggy, a four-wheeled buggy, and a snowmobile) , a scooter-type vehicle, or a small-sized vehicle such as a golf cart. Although the belt-type continuously variable transmission 200 included in a power unit is illustrated, the belt-type continuously variable transmission 200 may be provided separately from an engine.

As described above, a continuously variable transmission in accordance with the present invention can be widely utilized for continuously variable transmissions provided to vehicles or the like.

### Description of Reference Numerals and Symbols

1000 scooter-type motorcycle
900 power unit
11 primary shaft
12 secondary shaft (input shaft of a centrifugal clutch)
13 primary sheave
14 secondary sheave
15 belt
16 groove width adjustment mechanism
17 actuator
17 electric motor
19 flange position detection sensor
40 driven mechanism
31,41 fixed flange
32,42 movable flange
43 spring
91 throttle position sensor
92 engine speed sensor
92 sensor
93,94 vehicle speed sensor
95 sensor (rotational speed input to a centrifugal clutch)
96 sensor (rotational speed output to a centrifugal clutch)
100 engine
200 belt-type continuously variable transmission (continuously variable transmission)
300 centrifugal clutch
301 clutch plate
302 clutch shoe
303 clutch spring
304 clutch housing
305 pin
310 assembly
321 input torque
322 transmission torque
400 reduction gear
401 final gear shaft (output shaft of a centrifugal clutch)
500 driving wheel
600 control device
601 gear ratio map
611 first determination section
612 first detection section
613 first setting section
614 second determination section
615 clutch engagement processor (clutch engagement processing)
616 target gear ratio setting section
e regular target gear ratio
e1 target gear ratio at the time of clutch engagement processing
g first rotational speed
second rotational speed

## Claims

1. A continuously variable transmission (200) for transmitting power from an output shaft (11) of a drive unit (100) to an input shaft (12) of a centrifugal clutch (300) and comprising a control unit (600) for controlling a gear change ratio of the transmission (200), wherein the control unit (600) comprises a first setting section (613) that sets the predetermined first rotational speed (g) of the drive unit (100), which becomes a standard for starting the processing in which the change gear ratio of the continuously variable transmission (200) is controlled to a TOP side in order for the centrifugal clutch to be engaged, wherein the first rotational speed (g) is set as a value slightly lower than the upper limit value of the rotational speed of the drive unit (100) at the precise start-up; and
the control unit (600) is adapted to perform clutch engagement processing for controlling the change gear ratio of the continuously variable transmission (200) to the TOP side where the rotational speed input to the centrifugal clutch becomes faster and the centrifugal force acting on clutch shoes of the centrifugal clutch becomes larger, in order for the centrifugal clutch (300) to be engaged in a case where:
the centrifugal clutch (300) is disengaged; and
a rotational speed of the drive unit (100) is higher than the predetermined first rotational speed.

2. The continuously variable transmission (200) according to Claim 1, wherein the control unit (600) comprises a first determination section (611) for determining whether or not the centrifugal clutch (300) is engaged.

3. The continuously variable transmission (200) according to Claim 2, wherein the first determination section (611) is adapted to determine whether or not the centrifugal clutch (300) is engaged based on a rotational speed input to the centrifugal clutch (300) and a rotational speed output from the centrifugal clutch (300).

4. The continuously variable transmission (200) according to Claim 1, 2 or 3, wherein the control unit (600) comprises:
a first detection section (612) for detecting a rotational speed of the drive unit (100); and
a second determination section (614) for determining whether or not the rotational speed of the drive unit (100) detected in the first detection section (611) is higher than the first rotational speed set in the first setting section (613).

5. The continuously variable transmission (200) according to Claim 4, wherein the first detection section (612) is adapted to detect a rotational speed of the drive unit (100) based on a rotational speed of an input shaft (11) of the continuously variable transmission (200).

6. The continuously variable transmission (200) according to any one of Claims 2 to 5, wherein the clutch engagement processing is cancelled when the first determination section (611) determines that the centrifugal clutch (300) is engaged.

7. The continuously variable transmission (200) according to any preceding Claim, wherein the clutch engagement processing predetermines a second rotational speed, and divides the second rotational speed by a rotational speed input to a centrifugal clutch (300) to set a target change gear ratio at a time of the clutch engagement processing.

8. The continuously variable transmission (200) according to Claim 7, wherein the control unit (600) comprises:
a target change gear ratio setting section (616) for calculating a target rotational speed of an engine based on a vehicle speed and a throttle opening and for setting a target change gear ratio by dividing the target rotational speed of the engine by the vehicle speed,
wherein the clutch engagement processing is adapted to perform processing for setting a target change gear ratio for the clutch engagement processing in the target change gear ratio setting section (616) by utilizing the predetermined second rotational speed instead of the target rotational speed of the engine, and a rotational speed input to a centrifugal clutch (300) instead of the vehicle speed, and by dividing the predetermined rotational speed for the clutch engagement processing by the rotational speed input to the centrifugal clutch (300).

9. The continuously variable transmission (200) according to Claim 7 or 8, wherein the first rotational speed is used for the second rotational speed.

10. The continuously variable transmission (200) according to Claim 8 or 9, wherein the control unit (600) is adapted to cancel the clutch engagement processing in a case where a target change gear ratio set in the target change gear ratio setting section (616) based on a vehicle speed and a throttle opening is closer to a TOP side than target change gear ratio for the clutch engagement processing.

11. The continuously variable transmission (200) according to any preceding Claim, wherein the control unit (600) is adapted to cancel the clutch engagement processing when the centrifugal clutch (300) is detected as being engaged.

12. The continuously variable transmission (200) according to any preceding Claim, comprising:
a primary sheave (13) having a pair of flanges (31, 32) for relative movement in an axial direction, said primary sheave (13) being mounted on a primary shaft (11), to which output power of a drive shaft is transmitted;
a secondary sheave (14) having a pair of flanges (41, 42) for relative movement in an axial direction, said secondary sheave (14) being mounted on an input shaft (12) of a centrifugal clutch;
a belt (15) adapted to be wound around the primary and secondary sheaves (13, 14);
a driven mechanism (40) for changing a groove width of the secondary sheave (14) according to a groove width of the primary sheave (13) so that the secondary sheave (14) is capable of holding the belt (15); and
a control unit for controlling the groove width of the primary sheave (13).

13. A vehicle (1000) comprising a continuously variable transmission (200) according to any preceding Claim.

14. The vehicle (1000) of claim 13, comprising any one of a motorcycle, a straddle-type vehicle, a scooter type vehicle or a golf cart.

## Patentansprüche

1. Stufenlos verstellbares Getriebe (200) für das Übertragen der Leistung von einer Abtriebswelle (11) einer Antriebseinheit (100) zu einer Antriebswelle (12) einer Fliehkraftkupplung (300), und das eine Steuereinheit (600) für das Steuern eines Gangschaltungsverhältnisses des Getriebes (200) aufweist, wobei die Steuereinheit (600) einen ersten Einstellabschnitt (613) aufweist, der die vorgegebene erste Drehzahl (g) der Antriebseinheit (100) einstellt, die zu einem Standard für das Starten des Vorganges wird, bei dem das Wechselradverhältnis des stufenlos verstellbaren Getriebes (200) zu einer TOP-Seite gesteuert wird, damit die Fliehkraftkupplung eingekuppelt wird, wobei die erste Drehzahl (g) als ein Wert etwas niedriger als der obere Grenzwert der Drehzahl der Antriebseinheit (100) beim genauen Starten eingestellt wird; und
wobei die Steuereinheit (600) ausgebildet ist, um den Einkuppelvorgang für das Steuern des Wechselradverhältnisses des stufenlos verstellbaren Getriebes (200) zur TOP-Seite durchzuführen, wo der Drehzahleingang zur Fliehkraftkupplung schneller wird und die Fliehkraft, die auf die Kupplungsbacken der Fliehkraftkupplung wirkt, größer wird, damit die Fliehkraftkupplung (300) in einem Fall eingekuppelt wird, wo:
die Fliehkraftkupplung (300) ausgekuppelt ist; und
eine Drehzahl der Antriebseinheit (100) höher ist als die vorgegebene erste Drehzahl.

2. Stufenlos verstellbares Getriebe (200) nach Anspruch 1, bei dem die Steuereinheit (600) einen ersten Ermittlungsabschnitt (611) für das Ermitteln aufweist, ob die Fliehkraftkupplung (300) eingekuppelt ist oder nicht.

3. Stufenlos verstellbares Getriebe (200) nach Anspruch 2, bei dem der erste Ermittlungsabschnitt (611) ausgebildet ist, um zu ermitteln, ob die Fliehkraftkupplung (300) auf der Basis eines Drehzahleinganges in die Fliehkraftkupplung (300) und eines Drehzahlausganges aus der Fliehkraftkupplung (300) eingekuppelt ist oder nicht.

4. Stufenlos verstellbares Getriebe (200) nach Anspruch 1, 2 oder 3, bei dem die Steuereinheit (600) aufweist:
einen ersten Nachweisabschnitt (612) für das Nachweisen einer Drehzahl der Antriebseinheit (100); und
einen zweiten Ermittlungsabschnitt (614) für das Ermitteln, ob die im ersten Nachweisabschnitt (612) nachgewiesene Drehzahl der Antriebseinheit (100) höher ist als die erste Drehzahl, die im ersten Einstellabschnitt (613) eingestellt wird.

5. Stufenlos verstellbares Getriebe (200) nach Anspruch 4, bei dem der erste Nachweisabschnitt (612) ausgebildet ist, um eine Drehzahl der Antriebseinheit (100) auf der Basis einer Drehzahl einer Antriebswelle (12) des stufenlos verstellbaren Getriebes (200) nachzuweisen.

6. Stufenlos verstellbares Getriebe (200) nach einem der Ansprüche 2 bis 5, bei dem der Einkuppelvorgang rückgängig gemacht wird, wenn der erste Ermittlungsabschnitt (611) ermittelt, dass die Fliehkraftkupplung (300) eingekuppelt ist.

7. Stufenlos verstellbares Getriebe (200) nach einem der vorhergehenden Ansprüche, bei dem der Einkuppelvorgang eine zweite Drehzahl vorgibt und die zweite Drehzahl durch einen Drehzahleingang zu einer Fliehkraftkupplung (300) dividiert, um ein Zielwechselradverhältnis zum Zeitpunkt des Einkuppelvorganges einzustellen.

8. Stufenlos verstellbares Getriebe (200) nach Anspruch 7, bei dem die Steuereinheit (600) aufweist:
einen Zielwechselradverhältnis-Einstellabschnitt (616) für das Berechnen einer Zieldrehzahl eines Motors auf der Basis einer Fahrzeuggeschwindigkeit und einer Drosselöffnung und für das Einstellen eines Zielwechselradverhältnisses durch Dividieren der Zieldrehzahl des Motors durch die Fahrzeuggeschwindigkeit,
wobei der Einkuppelvorgang so eingestellt ist, dass ein Vorgang für das Einstellen eines Zielwechselradverhältnisses für den Einkuppelvorgang im Zielwechselradverhältnis-Einstellabschnitt (616) durch Nutzen der vorgegebenen zweiten Drehzahl anstelle der Zieldrehzahl des Motors und eines Drehzahleinganges zur Fliehkraftkupplung (300) anstelle der Fahrzeuggeschwindigkeit und durch Dividieren der vorgegebenen Drehzahl für den Einkuppelvorgang durch den Drehzahleingang zur Fliehkraftkupplung (300) durchgeführt wird.

9. Stufenlos verstellbares Getriebe (200) nach Anspruch 7 oder 8, bei dem die erste Drehzahl für die zweite Drehzahl verwendet wird.

10. Stufenlos verstellbares Getriebe (200) nach Anspruch 8 oder 9, bei dem die Steuereinheit (600) ausgebildet ist, um den Einkuppelvorgang in einem Fall rückgängig zu machen, wo ein Zielwechselradverhältnis, das im Zielwechselradverhältnis-Einstellabschnitt (616) auf der Basis einer Fahrzeuggeschwindigkeit und einer Drosselöffnung eingestellt wird, näher zu einer TOP-Seite ist als ein Zielwechselradverhältnis für den Einkuppelvorgang.

11. Stufenlos verstellbares Getriebe (200) nach einem der vorhergehenden Ansprüche, bei dem die Steuereinheit (600) ausgebildet ist, um den Einkuppelvorgang rückgängig zu machen, wenn nachgewiesen wird, dass die Fliehkraftkupplung (300) eingekuppelt ist.

12. Stufenlos verstellbares Getriebe (200) nach einem der vorhergehenden Ansprüche, das aufweist:
eine primäre Scheibe (13) mit einem Paar Flanschen (31, 32) für eine relative Bewegung in einer axialen Richtung, wobei die primäre Scheibe (13) auf einer primären Welle (11) montiert ist, auf die die Abtriebsleistung einer Antriebswelle übertragen wird;
eine sekundäre Scheibe (14) mit einem Paar Flanschen (41, 42) für eine relative Bewegung in einer axialen Richtung, wobei die sekundäre Scheibe (14) auf einer Antriebswelle (12) einer Fliehkraftkupplung montiert ist;
einen Riemen (15), der so ausgebildet ist, dass er um die primäre und sekundäre Scheibe (13, 14) gewickelt ist;
einen Abtriebsmechanismus (40) für das Wechseln einer Rillenbreite der sekundären Scheibe (14) entsprechend einer Rillenbreite der primären Scheibe (13), so dass die sekundäre Scheibe (14) den Riemen (15) aufnehmen kann; und
eine Steuereinheit für das Steuern der Rillenbreite der primären Scheibe (13).

13. Fahrzeug (1000), das ein stufenlos verstellbares Getriebe (200) nach einem der vorhergehenden Ansprüche aufweist.

14. Fahrzeug (1000) nach Anspruch 13, das ein Motorrad, ein Grätschsitz-Fahrzeug, einen Motorroller oder einen Golfwagen aufweist.

## Revendications

1. Transmission à variation continue (200), pour transmettre la puissance d'un arbre de sortie (11) d'une unité d'entraînement (100) vers un arbre d'entrée (12) d'un embrayage centrifuge (300), et comprenant une unité de commande (600) pour contrôler un rapport de changement de vitesses de la transmission (200), dans laquelle l'unité de commande (600) comprend une première section de réglage (613), réglant la première vitesse de rotation prédéterminée (g) de l'unité d'entraînement (100), établissant un standard pour démarrer l'opération au cours de laquelle le rapport de changement de vitesses de la transmission à variation continue (200) est contrôlé vers un côté supérieur, pour entraîner l'engagement de l'embrayage centrifuge, la première vitesse de rotation (g) étant réglée sous forme d'une valeur légèrement inférieure à la valeur limite supérieure de la vitesse de rotation de l'unité d'entraînement (100) lors du démarrage précis ; et
l'unité de commande (600) étant adaptée pour exécuter une opération d'engagement de l'embrayage de la transmission à variation continue (200) vers le côté supérieur, où la vitesse de rotation d'entrée de l'embrayage centrifuge est accélérée, la force centrifuge agissant sur les patins d'embrayage de l'embrayage centrifuge étant accrue, en vue d'entraîner l'engagement de l'embrayage dans un cas où :
l'embrayage centrifuge (300) est dégagé ; et
une vitesse de rotation de l'unité d'entraînement (100) est supérieure à la première vitesse de rotation prédéterminée.

2. Transmission à variation continue (200) selon la revendication 1, dans laquelle l'unité de commande (600) comprend une première section de détermination (611) pour déterminer si l'embrayage centrifuge est engagé ou non (300).

3. Transmission à variation continue (200) selon la revendication 2, dans laquelle la première section de détermination (611) est adaptée pour déterminer si l'embrayage centrifuge (300) est engagé ou non sur la base d'une vitesse de rotation d'entrée de l'embrayage centrifuge (300) et d'une vitesse de rotation de sortie de l'embrayage centrifuge (300).

4. Transmission à variation continue (200) selon les revendications 1, 2 ou 3, dans laquelle l'unité de commande (600) comprend :
une première section de détection (612), pour détecter une vitesse de rotation de l'unité d'entraînement (100) ; et
une deuxième section de détermination (614), pour déterminer si la vitesse de rotation de l'unité d'entraînement (100) détectée dans la première section de détection (612) est supérieure ou non à la première vitesse de rotation réglée dans la première section de réglage (613).

5. Transmission à variation continue (200) selon la revendication 4, dans laquelle la première section de détection (612) est adaptée pour détecter une vitesse de rotation de l'unité d'entraînement (100) sur la base d'une vitesse de rotation d'un arbre d'entrée (12) de la transmission à variation continue (200).

6. Transmission à variation continue (200) selon l'une quelconque des revendications 2 à 5, dans laquelle l'opération d'engagement de l'embrayage est annulée lorsque la première section de détermination (611) détermine que l'embrayage centrifuge (300) est engagé.

7. Transmission à variation continue (200) selon l'une quelconque des revendications précédentes, dans laquelle l'opération d'engagement de l'embrayage détermine d'avance une deuxième vitesse de rotation, et divise la deuxième vitesse de rotation par une vitesse de rotation d'entrée d'un embrayage centrifuge (300), pour régler un rapport de changement de vitesses cible lors d'une opération d'engagement de l'embrayage.

8. Transmission à variation continue (200) selon la revendication 7, dans laquelle l'unité de commande (600) comprend :
une section de réglage du rapport de changement de vitesses cible (616), pour calculer une vitesse de rotation cible d'un moteur sur la base d'une vitesse du véhicule et d'une ouverture du papillon des gaz, et pour régler un rapport de changement de vitesses cible en divisant la vitesse de rotation cible du moteur par la vitesse du véhicule ;
dans laquelle l'opération d'engagement de l'embrayage est adaptée pour exécuter une opération en vue de régler un rapport de changement de vitesses cible pour l'opération d'engagement de l'embrayage dans la section de réglage du rapport de changement de vitesses cible (616), en utilisant la deuxième vitesse de rotation prédéterminée à la place de la vitesse de rotation cible du moteur, et une vitesse de rotation d'entrée d'un embrayage centrifuge (300) à la place de la vitesse du véhicule, et en divisant la vitesse de rotation prédéterminée de l'opération d'engagement de l'embrayage par la vitesse de rotation d'entrée de l'embrayage centrifuge (300).

9. Transmission à variation continue (200) selon les revendications 7 ou 8, dans laquelle la première vitesse de rotation est utilisée pour la deuxième vitesse de rotation.

10. Transmission à variation continue (200) selon les revendications 8 ou 9, dans laquelle l'unité de commande (600) est adaptée pour annuler l'opération d'engagement de l'embrayage dans un cas où un rapport de changement de vitesses cible réglé dans la section de réglage du rapport de changement de vitesses cible (616) sur la base d'une vitesse du véhicule et d'une ouverture du papillon des gaz est plus proche d'un côté supérieur que le rapport de changement de vitesses cible pour l'opération d'engagement de l'embrayage.

11. Transmission à variation continue (200) selon l'une quelconque des revendications précédentes, dans laquelle l'unité de commande (600) est adaptée or annuler l'opération d'engagement de l'embrayage lorsqu'il est détecté que l'embrayage centrifuge (300) est engagé.

12. Transmission à variation continue (200) selon l'une quelconque des revendications précédentes, comprenant :
une poulie primaire (13), comportant une paire de brides (31, 32) en vue d'un déplacement relatif dans une direction axiale, ladite poulie primaire (13) étant montée sur un arbre primaire (11) vers lequel la puissance de sortie d'un arbre d'entraînement est transmise ;
une poulie secondaire (14), comportant une paire de brides (41, 42) en vue d'un déplacement relatif dans une direction axiale, ladite poulie secondaire (14) étant montée sur un arbre d'entrée (12) d'un embrayage centrifuge ;
une courroie (15), adaptée pour être enroulée autour des poulies primaire et secondaire (13, 14) ;
un mécanisme entrainé (40), pour changer une largeur de rainure de la poulie secondaire (14) en fonction d'une largeur de rainure de la poulie primaire (13), de sorte que la poulie secondaire (14) peut retenir la courroie (15) ; et
une unité de commande, pour contrôler la largeur de rainure de la poulie primaire (13).

13. Véhicule (1000), comprenant une transmission à variation continue (200) selon l'une quelconque des revendications précédentes.

14. Véhicule (1000) selon la revendication 13, comprenant un véhicule quelconque du groupe constitué par un motocycle, une véhicule du type à enfourcher, un véhicule du type scooter ou une voiturette de golf.
